# EUROPEAN PATENT APPLICATION

(11) **EP 4 819 251 A1**
(43) Date of publication of application: **07.10.2026**
(21) Application number: 25167784.5
(22) Date of filing: 01.04.2025
(51) Int. Cl.: H01M 4/90, C25B 1/30, C25B 1/55, C25B 3/21, C25B 3/26, C25B 9/23, H01M 4/98

(54) **USE OF AN INORGANIC COMPOUND OF MANGANESE FOR FORMING A COMPONENT FOR A DEVICE FOR AN ELECTROCHEMICAL REACTION, THE DEVICE, ITS USE AND A SET OF COMPONENTS OF IT, AND A RELATED METHOD**

(71) Applicant: TOYOTA JIDOSHA KABUSHIKI KAISHA, Toyota-shi, Aichi-ken, 471-8571 (JP); Dutch Institute For Fundamental Energy Research, 5612 AJ Eindhoven (NL)
(72) Inventor: JOHNSON, Hannah, 1140 BRUSSELS (BE); TSAMPAS, Michail, 5612 AJ EINDHOVEN (NL); PEETERS, Toon, 5612 AJ EINDHOVEN (NL); MOHAN, Roopathy, 5612 AJ EINDHOVEN (NL); KUNTURU, Pramod, 5612 AJ EINDHOVEN (NL)
(74) Representative: Cabinet Beau de Loménie

(57) **Abstract**

The invention relates to a use of an inorganic compound of manganese for forming a gas diffusion electrode in contact with an anion conducting membrane (1) as a component of a device for an electrochemical reaction which is a porous anode (2) for promoting an evolution of carbon dioxide and a production of hydrogen peroxide.

## Description

### BACKGROUND OF THE INVENTION

### 1. Field of the invention

The present disclosure relates to a use of inorganic compound of manganese being an oxide or an oxyhalide in a device for an electrochemical reaction, a set of components for the device for an electrochemical reaction, the device for an electrochemical reaction, its use and a method of using it.

### 2. Description of Related Art

EP 4 071 274 A1 shows a photo-electrochemical device for the capture of in particular atmospheric carbon dioxide with a porous photoanode in combination with an anion exchange membrane.

According to JP 2024-137606 A, an anion exchange membrane is combined with an anode which may comprise MnO used in a device for an electrochemical reaction to generate oxygen from water in the presence of a carbonate and/or hydrogen carbonate (or bicarbonate) ion, the device being operated to reduce carbon dioxide.

Fan et al., "CO2/carbonate-mediated electrochemical water oxidation to hydrogen peroxide", Nature Communications 13, 2668 (2022), https://doi.org/10.1038/s41467-022-30251-5, teaches generating H₂O₂ in an electrochemical system comprising an electrolyte with a carbonate and/or hydrogen carbonate (or bicarbonate) ion and an electrode composed of fluorine doped tin oxide-coated glass.

### SUMMARY

The invention provides a device for an electrochemical reaction and a related use and an involved set of components as well as a use of and a method with the device. Generally, a device for an electrochemical reaction may be one providing a powered electrochemical system (particularly electrically powered electrochemical system) or a photoelectrochemical system. In what follows the definition 'for an electrochemical reaction' encompasses both the powered electrochemical and the photoelectrochemical property of a system like a device, also commonly referred to using the adjective '(photo)electrochemical'. Specifically in a powered electrochemical system with an anode and cathode, electricity is used to power the reactions. In a photoelectrochemical system with a photoanode and cathode or a photocathode and an anode or a photoanode and photocathode light provides energy needed directly or in combination with electric power. The invention is applicable to an electrochemical system, in particular an electrochemical device, and may thus contribute to improve a powered electrochemical or a photoelectrochemical system. The context of the invention is thus not restricted to a device or use with a (powered) electrode pair of cathode and anode but relates also to combinations of an electrode with a photoelectrode so as to provide energy needed for the electrochemical reaction with light irradiated onto the photoelectrode (as a cathode or an anode) and converted by the photoelectrode to drive the electrochemical reaction.

It is an object of the present invention to allow profiting from a material for at least one of
- an efficient exploitation of electricity, in particular electricity, particularly from a renewable electric energy source like a photovoltaic energy source, or of light energy, and for concentration and/or converting chemical species, in particular from gas naturally containing CO₂ as the chemical species, in particular air that contains CO₂, or water, in particular sea water (in which carbonate and/or bicarbonate ions are formed from CO₂),
- an efficient exploitation of electricity or light energy for capturing carbon dioxide,
- offering electrodes able to favor the kinetics of a CO₂ release pathway,
- offering new performant combinations of photoabsorbers, porous electrodes, and/or ion exchange membranes, and
- efficiently obtaining a carbon rich gas stream from an air or water source (in particular ambient air or seawater) on a good quality level.

According to one aspect, the invention provides a use of an inorganic compound of manganese being an oxide or an oxyhalide, preferably selected from the group consisting of MnO₂, Mn₂O₃, Mn₃O₄, more preferably being manganese dioxide, for forming a gas diffusion electrode (GDE) that can be placed, in particular in contact with an anion conducting membrane, the gas diffusion electrode being a component of a device for an electrochemical reaction which is a porous anode for promoting an evolution of carbon dioxide and a production of hydrogen peroxide, in particular in a state of being supplied with direct current. For forming the gas diffusion electrode the inorganic compound of manganese, e.g. manganese dioxide, may be added to a porous substrate, optionally with the addition of ionomer, which may be the same as that of the anion conducting membrane, e.g. with a solution in line with a porous electrode formation in JP 2024 137606 A. The gas diffusion electrode (GDE) obtained with the inorganic compound of manganese, e.g. manganese dioxide, deposited e.g. on the porous substrate (being an electrode substrate) is one that is used in conjunction with an anion conducting membrane (in particular e.g. a portion of the anion conducting membrane without the deposited inorganic compound) and a cathode GDE to form an electrochemical cell.

When the device employed for an electrochemical reaction is a photo-electrochemical device and the inorganic compound of manganese, e.g. manganese dioxide, is used together with a photoabsorber, then the porous anode serves as a (photo)anode for promoting the evolution of gaseous carbon dioxide and the production of hydrogen peroxide in a state of being irradiated with light. In other words, the inorganic compound of manganese is then a co-catalyst (that promotes the reaction kinetics) on the photoanode. For such a use, the inorganic compound of manganese may be added together with the photoabsorber to the porous substrate (electrode substrate) to form a photoelectrode.

According to another aspect and consistent with the use according to the invention, the invention provides a set of components for an electrochemical device, which comprise
a membrane being an ionomer conductive to a hydroxide ion and at least one of bicarbonate and carbonate ions and
a porous gas diffusion anode for promoting an evolution of gaseous carbon dioxide and a production of hydrogen peroxide, placed at one of opposed main surfaces of the membrane, and formed from a deposition of a material including an inorganic compound of manganese being an oxide or oxyhalide on a porous structure.

The set of components may also be one comprising a porous gas diffusion cathode for promoting generating anions by reacting oxygen and by reacting carbon dioxide, placed at the other one of the opposed main surfaces of the membrane, and formed from a deposition of a material including a catalytic metal and/or a semiconductor on a porous structure. The cathode being a porous gas diffusion electrode (GDE) comprises or is preferably high surface area Ni, Raney Ni, silver, molybdenum sulfide and/or platinum, more preferably Raney Ni. The cathode GDE may be one which is or which is configured for being placed on the other one of the opposed main surfaces of the membrane and is one for converting oxygen and water into hydroxide ions.

In case that the set is for the photo-electrochemical device, the material further includes a photoabsorber, and the porous gas diffusion anode is an anode for promoting the evolution of gaseous carbon dioxide and the production of hydrogen peroxide in a state of being supplied with direct current and irradiated with light. The photoabsorber may be an inorganic oxide, preferably at least one of TiO₂, BiVO₄, and WO₃, or transition metal chalcogenide, such as MoS₂, WS₂ or an n-type organic semiconductor. Preferred materials for the porous (photo)cathode may be selected from the group consisting of: Si, MoS₂, MoSe₂, WS₂, GaP, CdS, CdSe, ZnSe, CuNbO₄, PMPDI, InP, WSe₂, ZnFe₂O₄, CuNbO₃, PMPDI, Cu₂O, g-C₃N₄, CIGS, CIGSe, CaFeO₂, CuFeO₂ and/or p-type organic semiconductor. Protection and or providing chemical compatibility with the alkaline environment can be provided by overcoatings, e.g. of TiO₂.

Generally, suitable substrate materials for a gas diffusion electrode are e.g. carbon (particularly suitable for the above mentioned anode), or stainless steel felt, nickel, titanium or nickel alloys. The substrate materials are provided as meshes, felts, or other porous structures, and preferably so that the GDEs have a microporous outer layer for contacting the membrane or in contact with the membrane. GDEs may be formed by sandwiching the membrane between layers of substrate materials with electrode materials involved in an electrochemical interaction, in particular with ions conducted by the membrane, being deposited on a respective side of the membrane and/or substrate the material thereon.

According to still another aspect, the invention provides a device for an electrochemical reaction, comprising the above-described set of components with the cathode as an electrolytic cell, and with at each of the anode and the cathode means for fluid exchange, which comprise means for supplying oxygen and carbon dioxide to the cathode and means for extracting fluid generated at the anode. As the means for fluid exchange there may be provided at each of the anode and the cathode means for supplying and means for extracting a fluid stream, preferably a gas stream and preferably also a fluid channel pattern on each of the anode and cathode as e.g. in case of the device illustrated in JP 2004 137 606 A. The means for supplying and means for extracting a fluid stream may be fluid ducts. The invention also provides a use of the device for an electrochemical reaction according to the invention, which is a use for extracting carbon dioxide with the means for extracting fluid generated at the anode, wherein a gas stream supplied from the means for supplying oxygen and carbon dioxide to the cathode is a humid gas stream containing carbon dioxide and oxygen, preferably a gas stream containing air or being air optionally enriched with carbon dioxide. The humid gas stream may be a gas stream from a separation of carbon dioxide from water accompanied by organic contaminants, preferably gas as ambient air or from a gas liquid separator supplied with sea water from which carbon dioxide may be captured with the invention. In particular if the gas stream is air or from air then the ambient humidity is sufficient and the gas stream does not need to be artificially humidified.
A still further aspect of the invention is a method of separating carbon dioxide from a humid gas stream containing carbon dioxide with the device for an electrochemical reaction of the invention comprising continuously
supplying a fluid containing carbon dioxide, oxygen and water to the cathode with means for supplying oxygen and carbon dioxide to the cathode,
supplying a current between the anode and the cathode,
extracting a gas stream with the means for extracting fluid generated at the anode, and
optionally supplying a humid gas stream to the anode and/or extracting a gas stream from the cathode.

The method may be performed with the invention's device having the invention's set of components for a photo-electrochemical device and as a method comprising irradiating the anode with light for promoting at least one reaction at the anode with ions transferred trough the membrane. In particular the gas streams may be supplied with the means for supplying a gas stream at the anode and the cathode are humid gas streams and/or, as described above, the device for an electrochemical reaction may be a photoelectrochemical device with the above-described photoanode and/or photocathode. With the photoanode comprising a photoabsorber the method becomes a method comprising irradiating the anode with light for promoting at least one reaction at the anode with ions transferred trough the membrane. With photocathode comprising a photoabsorber the method becomes a method comprising irradiating the cathode with light for promoting at least one reaction at the cathode generating ions to be transferred through the membrane.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
- FIG. 1 schematically shows a device which may be formed with different anode options
- FIG. 2 shows a current profile applied to a device as schematically shown in FIG. 1 and having an anode formed with MnO₂ and FIG. 3 a comparison of UV-vis spectra from a sample collected from this device and a hydrogen peroxide sample, and
- FIG. 4 shows a current profile applied to a device as schematically shown in FIG. 1 and having an anode formed with NiFeOₓ and FIG. 5 a comparison of UV-vis spectra from a sample collected from this device and a hydrogen peroxide sample.

### DETAILED DESCRIPTION OF EMBODIMENTS

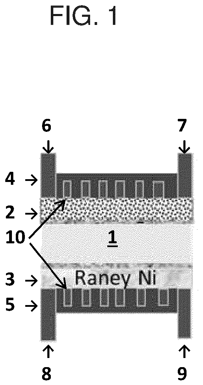

FIG. 1 schematically shows a (photo)electrochemical device which may be formed with different anode options. The (photo)electrochemical device is formed as a laminate with outer surfaces formed by current collectors (not separately shown in FIG. 1) like in the device disclosed in JP 2024 137606 A but with specific materials of the membrane 1 and the anode 2 and cathode 3 on respective opposite main surfaces of the membrane 1 as described below. Specifically, a set of components in the (photo)electrochemical device comprises a membrane 1 being anion exchange membrane, which is an ionomer conductive for a hydroxide ion and at least one of bicarbonate and carbonate ions. The set of components in the (photo)electrochemical device comprises a porous gas diffusion anode 2 formed from a deposition of a material including oxide and optionally a photoabsorber on a porous anion conducting material, the porous gas diffusion anode 2 being placed on one of opposed main surfaces of the membrane 1. The porous gas diffusion anode 2 is an anode for promoting the evolution of gaseous carbon dioxide and the production of hydrogen peroxide in a state of being supplied with direct current or supplied with direct current and irradiated with light. The photoabsorber is preferably an inorganic oxide or an organic semiconductor. In a same manner a porous gas diffusion cathode 3 is formed and placed on the other one of the opposed main surfaces of the membrane 1 but with functions for converting oxygen and water into hydroxide ions and carbon dioxide with hydroxide ions into bi carbonate and/or carbonate, preferably at least predominantly bicarbonate ions, and wherein material instead of material comprising manganese dioxide is Raney nickel and/or platinum. The (photo)electrochemical device of FIG. 1 comprises fluid ducts at each of the anode 2 and the cathode 3, both of which are gas diffusions electrodes (GDE), as means for supplying 6, 9 and means for extracting 7, 8 fluid and communicating with respective patterns of fluid channels 10 on a membrane-distal side of the anode or cathode, respectively, arranged in a conductive materials provided with current collectors as in a device shown in JP 2004 137606 A. Accordingly, patterns of fluid channels 10 integrated in closing structures 4, 5 (formed of bipolar plates) on the anode or the cathode are provided, respectively, which preferably allow irradiating the anode and/or the cathode with light thus being at least partially transparent closing structures (for the case of photoelectrodes). End faces of the anode and the cathode between the closing structures 4, 5 are closed with a suitable frame-like material not shown in FIG. 1 so as to allow fluid input into and output out of the device only with the ducts (as means for supplying 6, 9 and means for extracting 7, 8 fluid). As device in line with FIG. 1 may also particularly be formed as a device described as a first reactor in EP 4 071 274 A1, the description related to the first reactor in this document being herewith incorporated by reference, but may also be modified so as to form a device according to the invention. The (photo)electrochemical device of may be operated by continuously
supplying a humid gas stream containing carbon dioxide to the cathode 3 with the means for supplying a gas stream 9 at the cathode,
supplying a current between the anode 2 and the cathode 3,
extracting a gas stream with the means for extracting a gas stream 8 at the cathode,
extracting a gas stream with the means for extracting a gas stream 7 at the anode,
supplying a gas stream with the means for supplying a gas stream 6 at the anode.

Components, reactions and flows for devices in line with FIG. 1 are described hereafter.

### Membrane

A preferred option for the membrane 1 is available under the commercial name Piperion^{®}. Further options for the membrane 1 are anion exchange membrane materials containing quaternary ammonium groups (such as those sold under the commercial names: Fumasep^{®} FAA, A201, Orion^{®} TM1, Durion^{®}, Selemion^{®}) or low density polyurethane with quaternary ammonium groups; anion exchange membrane materials containing imidazolium or polybenzimidazole groups (such as those sold under the commercial names: Aemion^{®}, Sustainion^{®}), or tri-or di-amine cross-linked quaternized polysulfones. Preferred anion exchange membrane materials are ones containing quaternary ammonium groups, low density polyurethane with quaternary ammonium groups, or anion exchange membrane containing imidazolium or polybenzimidazole groups. A further preferred choice is the use of anion exchange membranes based on materials with vinylbenzyl chloride and imidazolium groups (such as those sold under the commercial name: Sustainion^{®}). Low-density polyethylene (LDPE) including grafted LDPE is another preferred option of the anion exchange membrane (AEM) in the present invention.

### Cathode

Examples of (known) cathode materials include: Pt/C, Pt-Ru/C, Au/C, Ni/C and Ni-felt, Ni, Raney Ni. A preferred option is Raney Ni. Carbon is also a suitable cathode but requires the use of a catalyst such as platinum, Pt / C cathodes being typically 60:40 Pt:C by weight. The cathode GDE materials may be provided on substrates such as carbon cloth or paper, a felt or a foam and preferably of stainless steel or a Ni-based porous substrate. As discussed above a photoabsorber and/or a component for compatibility with an alkaline environment may be included. Under this aspect preferred materials for the porous (photo)cathode may be selected from the group consisting of: Si, MoS₂, MoSe₂, WS₂, GaP, CdS, CdSe, ZnSe, CuNbO₄, PMPDI, InP, WSe₂, ZnFe₂O₄, CuNbO₃, PMPDI, Cu₂O, g-C₃N₄, CIGS, CIGSe, CaFeO₂, CuFeO₂ and/or p-type organic semiconductor, and/or protection and or providing chemical compatibility with the alkaline environment can be provided by overcoatings e.g. of TiO₂.

### Anode

An aspect of the invention is a use of an inorganic compound of manganese being an oxide or an oxyhalide for forming a gas diffusion electrode on an anion conducting membrane 1 of an (photo)electrochemical device, which is a porous anode 2 for promoting an evolution of carbon dioxide and a production of hydrogen peroxide, wherein optionally the (photo)electrochemical device is a photo-electrochemical device and the inorganic compound of manganese is used together with a photoabsorber and the porous anode 2 is an anode for promoting the evolution of gaseous carbon dioxide and the production of hydrogen peroxide in a state of being supplied with direct current and irradiated with light. The inorganic compound of manganese, e.g. manganese dioxide, may be used together with an oxide selected from the group consisting of: BiVO₄, TaOₓN_{y}, LaTiO₂N, BaTaO₂N, SrTaO₂N, WO₃, CuWO₄, Fe₂O₃, ZnFe₂O₄, TiO₂. A particularly preferred list consists of: BiVO₄, TiO₂, WO₃ or transition metal chalcogenide, such as MoS₂, WS₂ or an n-type organic semiconductor as co-catalysts for the catalyst of the inorganic compound of manganese, e.g. a manganese dioxide catalyst.

A reference anode material for examining the performance of products of the invention is NiFeOₓ.

### Reactions

For supplying cations through the membrane 1, the following reactions can be established at the cathode:

O₂ + 2 H₂O + 4e⁻ → 4 OH⁻ (1)

OH⁻ + CO₂ 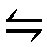 HCO₃⁻ (2)

HCO₃⁻ + OH⁻ 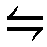 CO₂ + H₂O (3)

Preferably, reaction (2) is dominant compared to reaction (3).

For reacting the cations provided through the membrane 1, the following reactions can be established at the anode:

4 OH⁻ → H₂O₂ + 4 e⁻ (4)

HCO₃⁻ + OH⁻ → CO₂ + H₂O₂ + 2 e⁻ (5)

CO₃²⁻ + H₂O → CO₂ + H₂O₂ + 2 e⁻ (6)

Preferably, reaction (5) is dominant compared to reaction (6).

Generally, as an oxygen evolution reaction carbonate and/or bicarbonate, preferably bicarbonate may be reacted with hydroxide or water, preferably bicarbonate with hydroxide, to from carbon dioxide for capturing carbon dioxide at a fluid outlet or duct at the anode and to produce of hydrogen peroxide.

This concept suppresses oxygen amounts in the captured carbon dioxide at a fluid outlet or duct. This concept yields H₂O₂ as a useful product or oxidant for organic impurities in a fluid supplied to anode. In particular under these aspects an efficiency of capturing carbon dioxide becomes excellent. Specifically, it is believed that the (photo)electrochemical process at the anode facilitates the decomposition of hydrogen peroxide, leading to the liberation of CO₂ , which was previously captured at the cathode as bicarbonate. For this concept a (photo)electrochemical device has been described that was meant to refer to either an electrochemical device and / or photoelectrochemical device. In the electrochemical device, the MnO₂ is deposited for forming on a gas diffusion electrode (anode) and acts as a catalyst for the CO₂ evolution reaction and H₂O₂ formation. In a photoelectrochemical device an additional photoabsorber (for example, TiO₂, BiVO₄, WO₃, organic semiconductor) is used for forming a photoanode with an MnO₂ co-catalyst.

### Fluid exchange

As described above, the device shown in FIG. 1 has closing structures 4, 5 (which are bipolar plates) with means for fluid exchange at each of the anode 2 and the cathode 3. Specifically, these means are ducts for supplying 6, 9 and ducts for extracting 7, 8 fluid, in particular to pass gas flows in opposite directions at anode side and cathode side surfaces of the membrane 1.

Extracting carbon dioxide with the means for fluid exchange at the anode and/or with the means for fluid exchange at the cathode may be performed, and a gas stream supplied from the means for fluid exchange at the cathode is a gas stream containing carbon dioxide and water (in particular humidity).

This allows providing continuously
supplying a fluid, in particular humid gas stream containing carbon dioxide and water to the cathode 3 with a duct 9 as part of a means for fluid exchange at the cathode,
supplying a current between the anode 2 and the cathode 3 for gas absorption at the cathode 3 and gas generation at the anode 2,
extracting a gas stream with a duct 7 as part of a means for fluid exchange at the anode,
and according to preferences
supplying a preferably carbon dioxide free and preferably inert and/or humidified gas stream with a duct 6 as a means for supplying a gas stream 6 at the anode, and/or
extracting a gas stream with a duct 8 at the cathode.

### Experimental devices and fluid exchanges

To obtain the device as described above in relation to FIG. 1, a membrane available under the commercial name Piperion^{®} was sandwiched between two GDE i.e. a GDE with Raney Ni to form a cathode GDE 3 and a GDE with manganese dioxide to form an anode 2 while leaving a surrounding frame portion of the membrane material free of the deposition, thus obtaining two (framed) electrodes. These electrodes were placed on opposite sides of a pre-wetted membrane available under the commercial name Piperion^{®} having a thickness of 80 µm and the resulting set of components is pressed between two closing structures (being bipolar plates) with a force of 1.5 Nm to prevent gas leakage and undesired cross-contamination between compartments, optimizing electrochemical performance and measurement accuracy. In this manner a manganese dioxide (MnO₂)-Piperion^{®} ionomer modification was placed on the anode surface to be positioned on one side of the membrane 1 serving as the anode 2, and a Raney nickel (Raney Ni)-Piperion^{®} ionomer modification was positioned on the opposite side of the membrane 1, serving as the cathode 3. The membrane 1 was a Piperion^{®}-based anion exchange membrane, pre-wetted with deionized (DI) water, is centrally positioned between the electrodes (anode 2 and cathode 3). The membrane 1 had a thickness of approximately 80 µm, ensuring optimal ion transport and minimal resistance.

Commercially available gas sensors are placed for gas sensing at the duct 7 for gas extraction at the anode, namely an oxygen sensor available under the commercial name PreSens and an NDIR (non-dispersive infrared spectroscopy) carbon dioxide sensor. The NDIR (non-dispersive infrared spectroscopy) carbon dioxide sensor is likewise provided for gas sensing at the duct 8 for gas extraction at the cathode.

Accordingly, a gas analysis system for CO₂ and O₂ monitoring is used as a real-time gas monitoring system with CO₂ quantification via Non-Dispersive Infrared (NDIR) sensing. For this purpose, a NDIR sensor is integrated at both the anode and cathode compartments to facilitate continuous CO₂ concentration analysis. The anode gas at outlet duct 7 is routed through a Peltier cooling system prior to entering the NDIR sensor to ensure temperature stabilization. The NDIR sensor (not shown in FIG. 1) quantifies CO₂ evolution, providing real-time data on carbon release dynamics. The cathode gas at outlet duct 8 is similarly processed through a Peltier cooling system before entering the NDIR sensor. The NDIR sensor measures CO₂ capture efficiency, enabling assessment of carbon capture mechanisms at the cathode.

Commercially available equipment is connected to the cell's electrodes, namely a potentiostat (from Ivium Technologies, www.ivium.com) and devices of electrochemical impedance spectroscopy (EIS), linear sweep voltammetry (LSV) and chronoamperometry (CP) measurements which are described in detail as steps 1 to 5 below.

The following fluid streams were supplied at duct 6 to the anode 2 and duct 9 to the cathode 3 as illustrated in FIG. 1 for respective operations as follows:

| | experiment | control experiment |
|---|---|---|
| duct 6 | 50 sccm humidified Ar gas | deionized water of a flow cycle, i.e. recycled from duct 7 |
| duct 9 | 100 sccm ambient air (with ambient humidity) enriched with 500 ppm CO₂ | 100 sccm ambient air (with ambient humidity) enriched with 500 ppm CO₂ |

A reference device produced, connected to measurements and supplied with fluids in the same manner except that the anode was formed with a deposition of NiFeOₓ instead of manganese dioxide.

The device with its cell and the reference device, both formed of the membrane 1 and respective adjacent electrodes 2, 3, were each supplied with a current profile from the potentiostat having subsequently:
- an equilibration phase in which the cell was held at 0 mA for 1 hour to establish baseline conditions,
- a reaction phase in which a constant current of 5 mA was applied for approximately 2.5 days to facilitate electrochemical transformations,
- a post-reaction phase in which the current was reduced to 0 mA for an additional 1 hour, allowing for observation of transient species.

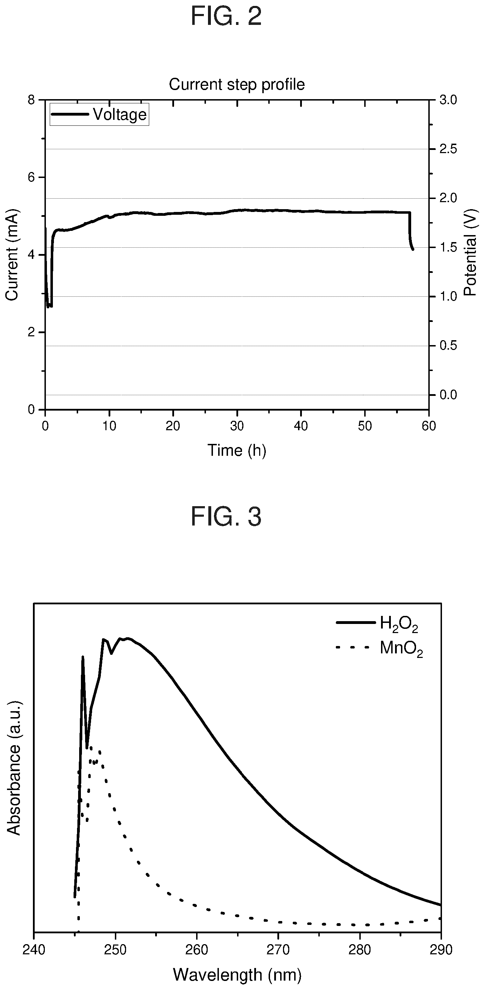

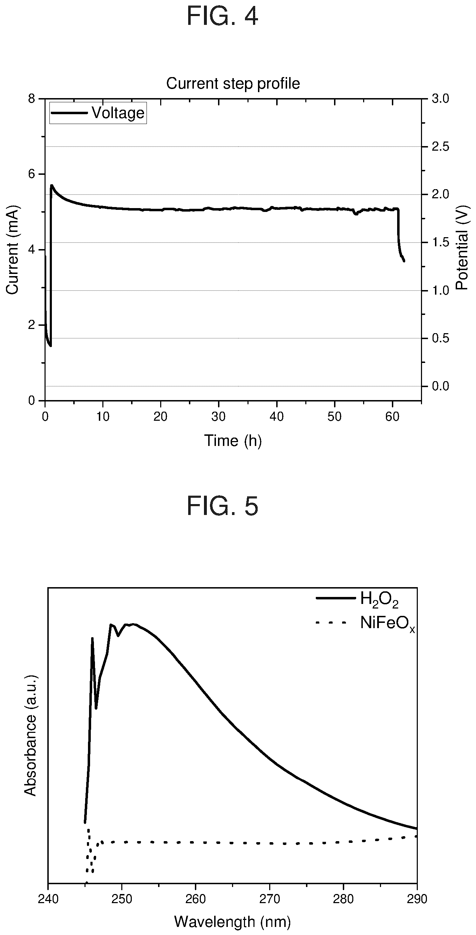

Resulting measured current and voltage curves (at the potentiostat) of a section of this profile are shown in FIG. 2 for the device and FIG. 4 for the reference device. For the measurement the device was equipped with a 200 mL anode-side electrolyte (water) reservoir of a gas-liquid separator (GLS) between at duct 7 and at the end of the aforementioned current profile 2 mL aliquots were extracted from the 200 mL anode-side electrolyte reservoir (of the GLS). These aliquots were analyzed using UV-Vis spectrophotometry over a wavelength range of 240-300 nm to detect the presence of hydrogen peroxide. With UV-Vis spectrophotometry spectral analysis revealed a broad absorption peak in the 250-260 nm range, which is characteristic of hydrogen peroxide (H₂ O₂ ). To validate this result, control experiments were performed using DI water as a reference sample (the control experiment's fluid stream). Calibration curves were obtained using known concentrations of hydrogen peroxide to confirm spectral alignment. The observed peroxide peak at 250-260 nm confirmed the formation of hydrogen peroxide in the anode electrolyte, supporting the hydrogen peroxide-mediated pathway for CO₂ release. The respective UV-Vis spectrophotometry results are shown in FIG. 3 for the device and in FIG. 5 for the reference device.

### Steps 1 to 5

Step 1 is a baseline Electrochemical Impedance Spectroscopy (EIS) Measurement: A preliminary electrochemical impedance spectroscopy (EIS) measurement is conducted at an applied potential of 0V to establish the initial impedance characteristics. The impedance is recorded over a frequency range spanning from 100 kHz to 0.1 Hz to characterize interfacial resistance and charge transfer properties.

Step 2 is a Linear Sweep Voltammetry (LSV) Analysis: A linear sweep voltammetry (LSV) scan is performed within the voltage range of 0V to 1.5V at a defined scan rate of 1 mV/s. The current-voltage response is continuously recorded to assess electrochemical behavior under varying potential conditions.

Step 3 is a Current Step Transient Analysis (Chronoamperometry): A stepwise current application protocol is executed, wherein discrete current steps of 0 mA → 1 mA → 2 mA → 3 mA → 4 mA → 0 mA are applied. Each current step is maintained for a duration of 1800 seconds (30 minutes) to allow stabilization and facilitate transient response analysis with relaxation time of 3600 s at 0 mA current applied. The resulting current-time transients are continuously monitored and recorded.

Step 4 is a Post-Transient Linear Sweep Voltammetry (LSV) Measurement: Following the completion of the current step transient analysis, a second LSV measurement is conducted under identical conditions. The voltage is swept from 0V to 1.5V at a scan rate of 1 mV/s, allowing comparison with the initial LSV response to evaluate any electrochemical modifications.

Step 5 is a Final Electrochemical Impedance Spectroscopy (EIS) Measurement: A secondary electrochemical impedance spectroscopy (EIS) measurement is conducted at 0V to determine any variations in impedance characteristics post-experimentation. The impedance is recorded across the 100 kHz to 0.1 Hz frequency range, enabling comparative analysis with the initial EIS data.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A use of an inorganic compound of manganese being an oxide or an oxyhalide for forming a gas diffusion electrode in contact with an anion conducting membrane (1) as a component of a device for an electrochemical reaction which is a porous anode (2) for promoting an evolution of carbon dioxide and a production of hydrogen peroxide.

2. The use according to claim 1, wherein the device for an electrochemical reaction is a photo-electrochemical device, and the inorganic compound of manganese is used together with a photoabsorber for forming the gas diffusion electrode, and the porous anode (2) is an anode for promoting the evolution of gaseous carbon dioxide and the production of hydrogen peroxide in a state of being supplied with direct current and irradiated with light.

3. A set of components for a device for an electrochemical reaction, which comprises
a membrane (1) being an ionomer conductive for a hydroxide ion and at least one of bicarbonate and carbonate ions and
a porous gas diffusion anode (2) for promoting an evolution of gaseous carbon dioxide and a production of hydrogen peroxide, placed at one of opposed main surfaces of the membrane (1), and formed from a deposition of a material including an oxide and/or an oxyhalide of manganese on a porous structure.

4. The set of components according to claim 3, wherein the device for an electrochemical reaction is a photo-electrochemical device, the material further includes a photoabsorber, and the porous gas diffusion anode (2) is an anode for promoting the evolution of gaseous carbon dioxide and the production of hydrogen peroxide in a state of being supplied with direct current and irradiated with light.

5. The set of components according to claim 4, wherein the photoabsorber is an inorganic oxide or an organic semiconductor.

6. The set of components according to any of claims 3, 4, and 5, comprising a porous gas diffusion cathode (3) for promoting generating anions by reacting oxygen and by reacting carbon dioxide, placed at the other one of the opposed main surfaces of the membrane (1), and formed from a deposition of a material including a catalytic metal and/or a semiconductor on a porous structure.

7. The set of components according to claim 6, wherein the cathode (3) comprises Raney nickel and/or platinum.

8. A device for an electrochemical reaction, comprising
the set of components according to claim 6 or 7 as an electrolytic cell and
at each of the anode (2) and the cathode (3), means for fluid exchange (6, 7, 8, 9) which comprise means for supplying (9) oxygen and carbon dioxide to the cathode (3) and means for extracting (7) fluid generated at the anode (2).

9. A use of the device for an electrochemical reaction according to claim 8 for extracting carbon dioxide with the means for extracting (7) fluid generated at the anode (2),
wherein a gas stream supplied from the means for supplying (6) oxygen and carbon dioxide to the cathode (3) is a humid gas stream containing carbon dioxide and oxygen.

10. The use according to claim 9, wherein the humid gas stream containing carbon dioxide contains air.

11. The use according to claim 9 or 10, wherein the humid gas stream is a gas stream from a separation of carbon dioxide from water accompanied by organic contaminants.

12. A method of separating carbon dioxide from a humid gas stream containing carbon dioxide with the device for an electrochemical reaction of claim 8, comprising continuously
supplying a fluid containing carbon dioxide, oxygen and water to the cathode (3) with means for supplying (9) oxygen and carbon dioxide to the cathode (3),
supplying a current between the anode (2) and the cathode (3), and
extracting a gas stream with the means for extracting (7) fluid generated at the anode (2).

13. The method according to claim 12, comprising supplying a humid gas stream to the anode and/or extracting a gas stream from the cathode.

14. The method according to claim 12 or 13,
wherein the device for an electrochemical reaction of claim 8 comprises the set of components according to claim 4 and 6, and
the method comprising irradiating the anode (2) with light for promoting at least one reaction at the anode (2) with ions transferred trough the membrane (1).

## Amended claims

### Amended claims in accordance with Rule 137(2) EPC.

1. A use of an inorganic compound of manganese being an oxide or an oxyhalide for forming a gas diffusion electrode in contact with an anion conducting membrane (1) as a component of a device for an electrochemical reaction which is a porous anode (2) for promoting an evolution of carbon dioxide and a production of hydrogen peroxide, wherein the device for an electrochemical reaction is a photoelectrochemical device, and the inorganic compound of manganese is used together with a photoabsorber for forming the gas diffusion electrode, and the porous anode (2) is an anode for promoting the evolution of gaseous carbon dioxide and the production of hydrogen peroxide in a state of being supplied with direct current and irradiated with light.

2. A set of components for a device for an electrochemical reaction being a photoelectrochemical device, which comprises
a membrane (1) being an ionomer conductive for a hydroxide ion and at least one of bicarbonate and carbonate ions and
a porous gas diffusion anode (2) for promoting, in a state of being supplied with direct current and irradiated with light, an evolution of gaseous carbon dioxide and a production of hydrogen peroxide, placed at one of opposed main surfaces of the membrane (1), and formed from a deposition of a material including a photoabsorber as well as an oxide and/or an oxyhalide of manganese on a porous structure.

3. The set of components according to claim 2, wherein the photoabsorber is an inorganic oxide or an organic semiconductor.

4. The set of components according to claim 2 or 3, comprising a porous gas diffusion cathode (3) for promoting generating anions by reacting oxygen and by reacting carbon dioxide, placed at the other one of the opposed main surfaces of the membrane (1), and formed from a deposition of a material including a catalytic metal and/or a semiconductor on a porous structure.

5. The set of components according to claim 4, wherein the cathode (3) comprises Raney nickel and/or platinum.

6. A device for an electrochemical reaction, comprising
the set of components according to claim 4 or 5 as an electrolytic cell and
at each of the anode (2) and the cathode (3), means for fluid exchange (6, 7, 8, 9) which comprise means for supplying (9) oxygen and carbon dioxide to the cathode (3) and means for extracting (7) fluid generated at the anode (2).

7. A use of the device for an electrochemical reaction according to claim 6 for extracting carbon dioxide with the means for extracting (7) fluid generated at the anode (2),
wherein a gas stream supplied from the means for supplying (6) oxygen and carbon dioxide to the cathode (3) is a humid gas stream containing carbon dioxide and oxygen.

8. The use according to claim 7, wherein the humid gas stream containing carbon dioxide contains air.

9. The use according to claim 7 or 8, wherein the humid gas stream is a gas stream from a separation of carbon dioxide from water accompanied by organic contaminants.

10. A method of separating carbon dioxide from a humid gas stream containing carbon dioxide with the device for an electrochemical reaction of claim 6, comprising continuously
supplying a fluid containing carbon dioxide, oxygen and water to the cathode (3) with means for supplying (9) oxygen and carbon dioxide to the cathode (3),
supplying a current between the anode (2) and the cathode (3), and
extracting a gas stream with the means for extracting (7) fluid generated at the anode (2).

11. The method according to claim 10, comprising supplying a humid gas stream to the anode and/or extracting a gas stream from the cathode.

12. The method according to claim 10 or 11,
wherein the device for an electrochemical reaction of claim 6 comprises the set of components according to claim 2 and 4, and
the method comprising irradiating the anode (2) with light for promoting at least one reaction at the anode (2) with ions transferred trough the membrane (1).
